# EUROPÄISCHE PATENTSCHRIFT

(11) **EP 3 069 777 B1**
(45) Veröffentlichungstag und Bekanntmachung des Hinweises auf die Patenterteilung: **22.12.2021**
(21) Anmeldenummer: 16160863.3
(22) Anmeldetag: 17.03.2016
(51) Int. Cl.: B01D 53/02, B01D 53/04, B01J 20/29, C07B 57/00, B01J 20/14, B01J 20/32

(54) **VERFAHREN ZUR GASCHROMATOGRAPHISCHEN TRENNUNG EINES ENANTIOMERENGEMISCHES**
METHOD FOR GAS CHROMATOGRAPHIC SEPARATION OF AN ENANTIOMER MIXTURE
PROCEDE DE SEPARATION PAR CHROMATOGRAPHIE EN PHASE GAZEUSE D'UN MELANGE D'ENANTIOMERES

(30) Priorität: 17.03.2015 CH 3742015
(43) Veröffentlichungstag der Anmeldung: 21.09.2016
(73) Patentinhaber: ZHAW Zurich University for Applied Sciences, 8820 Wädenswil (CH)
(72) Erfinder: SPENGER, Benjamin, 8820 Wädenswil (CH); STOHNER, Jürgen, 8810 Horgen (CH)
(74) Vertreter: Schmauder & Partner AG Patent- & Markenanwälte VSP

(56) Entgegenhaltungen:
- EP-B1- 0 407 412
- DE-A1- 4 317 139
- JP-A- 2000 329 756
- JP-A- 2005 031 091
- SCHURIG V: "Separation of enantiomers by gas chromatography", JOURNAL OF CHROMATOGRAPHY, ELSEVIER SCIENCE PUBLISHERS B.V, NL, Bd. 906, Nr. 1-2, 12. Januar 2001 (2001-01-12), Seiten 275-299, XP004227666, ISSN: 0021-9673, DOI: 10.1016/S0021-9673(00)00505-7
- MISCHNICK-LUBBECKE P ET AL: "Characterization of cyclomalto-hexaose and -heptaose derivatives by the reductive-cleavage method", CARBOHYDRATE RESEARCH, PERGAMON, GB, Bd. 187, Nr. 2, 15. April 1989 (1989-04-15), Seiten 197-202, XP026606742, ISSN: 0008-6215, DOI: 10.1016/0008-6215(89)80003-5 [gefunden am 1989-04-15]
- None

## Beschreibung

### Technisches Gebiet

Die vorliegende Erfindung betrifft ein Verfahren zur gaschromatographischen Trennung eines Enantiomerengemisches gemäss Oberbegriff des Anspruchs 1.

### Stand der Technik

Kleine chirale Moleküle sind von fundamentalem theoretischem und experimentellem wissenschaftlichem Interesse. Beispielsweise wird anhand kleiner chiraler Moleküle die Paritätsverletzung untersucht und Experimente zur Bestimmung der absoluten Konfiguration durch Cold Target Recoil Ion Momentum Spectroscopy mit Laser induzierten Coulomb Explosionen durchgeführt. Für solche und andere Experimente sind enantiomerenreine Proben kleiner chiraler Verbindungen in oftmals grösserer Menge unumgänglich.

Es ist anspruchsvoll, kleine chirale Verbindungen in ihre Enantiomere zu trennen, weil der strukturelle Unterschied zwischen den beiden Molekülen nur gering ist. Solche sterische Unterschiede sind aber für eine effektive Chiralitätserkennung notwendig. Herkömmliche Trennmethoden wie die präparative Hochdruckflüssigkeitschromatographie eignen sich nicht für die Enantiomerentrennung sehr kleiner Moleküle, weil der ohnehin schon kleine sterische Unterschied der Moleküle durch die Ausbildung eines Solvenskäfigs schliesslich fast ganz verwischt wird. Selbst wenn die flüssigchromatographische Trennung möglich wäre, bestünde das schwierige Problem, die flüchtigen Analyte aus der flüssigen Mobilphase wieder rein zu isolieren, ohne enorme Ausbeuteverluste zu verursachen. Der derzeit einzige Weg, an enantiomerenreine Proben kleiner chiraler Moleküle zu gelangen, ist die asymmetrische Synthese, welche vor allem über nasschemische Trennungen ausgeführt wird. Die asymmetrische Synthese ist ausserordentlich komplex, sehr zeitaufwändig und muss überdies für jedes gewünschte Zielmolekül neu ausgearbeitet und modifiziert werden. Nasschemische Trennungen sind unflexibel und teuer und zeichnen sich gewöhnlich durch geringe Ausbeuten und tiefe Reinheiten aus.

Ein Verfahren zur präparativen Enantiomerentrennung von Inhalations-Anästhetika (Narkosegase) durch Gepacktsäulen-Gaschromatographie wurde von V. Schurig et al. in DE 43 17 139 A1 vorgeschlagen (siehe auch: Z. Jiang, J. Crassous und V. Schurig. Gas-chromatographic separation of tri(hetero)halogenomethane enantiomers. Chirality, 17(8):488-93, 2005 und nachfolgende Publikationen). Dieses beruht darauf, dass als Trennphase ein derivatisiertes Cyclodextrin in Polysiloxanlösung auf einem porösen Trägermaterial wie beispielsweise Chromosorb eingesetzt wird. Schurig et al. verwendeten zwar eine stationäre Phase, welche Methanderivate in analytischen Mengen in ihre Enantiomere trennen konnte, jedoch gelang für diese Substanzklasse nie die Übertragung in den präparativen Massstab. Der Versuch, eine präparative Säule mit dieser stationären Phase herzustellen, gelang Schurig et al. zwar (V. Schurig und H. Grosenick. Preparative enantiomer separation of enflurane and isoflurane by inclusion gas chromatography. Journal of Chromatography A, 666(1-2):617-625, 1994), jedoch trugen die kleinsten Enantiomere, welche damit getrennt wurden, immer noch mindestens 3 Kohlenstoffatome. Die Trennung von Methanderivaten war mit den präparativen Säulen der Gruppe Schurig nicht möglich.

Die Verwendung substituierter Cyclodextrine zur gaschromatografischen Trennung chiraler organischer Verbindungen wurde auch von W. König et al. in US 5,198,429 beschrieben, siehe auch: A. W. König (Gas Chromatographic Enantiomer Separation with Modified Cyclodextrins. Hüthig, Heidelberg, 1992), D. W. Armstrong et al. (W. Li, H. L. Jin und D. W. Armstrong. 2,6-Di-O-pentyl-3-O-trifluoroacetyl cyclodextrin liquid stationary phases for capillary gas chromatographic separation of enantiomers. Journal of Chromatography A, 509(2):303―324, 1990.) und D Witsuba et al. (D. Wistuba und V. Schurig. Enantio- and regioselectivity in the epoxidehydrolase-catalyzed ring opening of simple aliphatic oxiranes: Part I: Monoalkylsubstituted oxiranes. Chirality, 4:175-184, 1992), welche jeweils nur im analytischen Massstab kleine chirale Moleküle trennen konnten, hingegen aber nicht im präparativen.

Die Dokumente JP 2000 329756 A und JP 2005 31091 A beschreiben ein Verfahren zur analytischen Trennung grösserer organischer Verbindungen. In beiden Fällen ist obligatorisch vorgesehen, dass die stationäre Phase mindestens zwei Cyclodextrine enthält.

### Darstellung der Erfindung

Aufgabe der Erfindung ist es demnach, ein verbessertes Verfahren zur chromatographischen Enantiomerentrennung anzugeben, das insbesondere auch eine präparative Auftrennung von Enantiomerengemischen kleiner chiraler Moleküle, insbesondere auch solcher mit nur einem Kohlenstoffatom ermöglicht.

Diese Aufgabe wird erfindungsgemäss gelöst durch das Verfahren nach Anspruch 1.

Bevorzugte Ausführungsformen sind in den abhängigen Ansprüchen definiert.

Beim erfindungsgemässen Verfahren wird das Enantiomerengemisch als gasförmige mobile Phase durch eine auf einem Trägermaterial fixierte stationäre Phase geleitet. In der Regel wird hierfür eine säulenartige Anordnung verwendet, bei der sich das mit der stationären Phase beladene, vorzugsweise feinkörnige Träger- oder Matrixmaterial in einer Säule oder anderem rohrartigen Gehäuse befindet. Die Trennung der Enantiomeren ergibt sich dadurch, dass die Enantiomeren leicht unterschiedliche Laufzeiten durch die besagte Anordnung haben. Erfindungsgemäss wird als stationäre Phase Hexakis(2,3,6-tri-*O*-butyl)-cyclomaltohexaose (HpBu) in einem nichtflüchtigen Lösemittel eingesetzt.

### Cyclomaltohexaose hat die folgende Struktur:

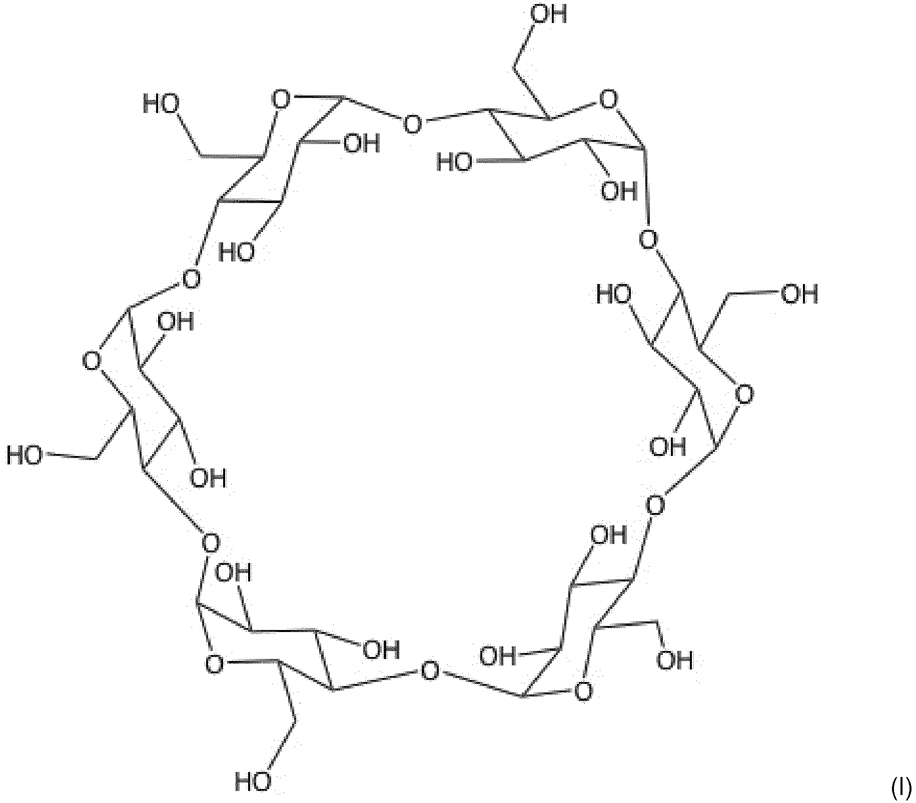

Hexakis(2,3,6-tri-*O*-butyl)cyclomaltohexaose (HpBu) ist der entsprechende Butylester, bei dem jede OH-Gruppe von (I) durch eine n-Butoxy-Gruppe ersetzt ist. Die Verbindung ist grundsätzlich bekannt, siehe beispielsweise P. Mischnick-Lübbecke und Ralph Krebber, Carbohydrate Research 187 (1989) 197 - 202.

Überraschend wurde gefunden, dass eine aus HpBu in einem nichtflüchtigen Lösemittel gebildete stationäre Phase hervorragend für die Trennung der Enantiomeren kleiner Moleküle geeignet ist. Insbesondere ist HpBu den entsprechenden Hexyl- und Pentylestern deutlich überlegen. Ohne an eine Theorie gebunden zu sein, kann vermutet werden, dass HpBu den Einschluss der Analyten in die chemisch modifizierte Cyclodextrinkavität erlaubt, wo von allen Seiten enantioselektive Interaktionen zwischen dem als Selektor wirkenden Cyclodextrinderivat und den beiden Enantiomeren stattfinden.

Für gewisse Anwendungen kann der Butylrest von HpBu ganz oder teilweise fluoriert oder deuteriert sein.

Das erfindungsgemässe Verfahren zeichnet sich insbesondere dadurch aus, dass damit kleine und kleinste chirale Moleküle in ihre Enantiomere getrennt werden können. Diese Trennungen funktionieren sowohl im analytischen Massstab, beispielsweise zur quantitativen Bestimmung des Enantiomerenüberschusses, als auch im präparativen Massstab welcher die Bereitstellung grösserer Mengen enantiomerenreiner Substanz mit guter Ausbeute ermöglicht.

Das erfindungsgemässe Verfahren kann als mobile Phase preisgünstige, ungiftige Trägergase verwenden, welche ökologisch unbedenklich sind und gut von den Analyten abgetrennt werden können.

Als nichtflüchtiges Lösemittel für die stationäre Phase wird vorteilhafterweise ein Polysiloxan verwendet (Anspruch 2).

Grundsätzlich können als Matrix- und Trägermaterialien alle in der Gaschromatographie hierfür üblicherweise verwendeten Materialien eingesetzt werden. Ein vorteilhaftes Trägermaterial ist beispielsweise Kieselgur, das auch als Chromosorb bekannt ist (Anspruch 3).

Das erfindungsgemässe Verfahren kann insbesondere für die Trennung von Enantiomerengemischen folgender Verbindungsklassen eingesetzt werden:
- Halomethane
- C2- oder C3-Halocarbonsäuren sowie deren Ester, Amide und Thioester
- C2- oder C3-Halooxirane (C2-C3).

### Wege zur Ausführung der Erfindung

Die Erfindung wird nachfolgend anhand von Beispielen erläutert.

### Beispiel 1

Herstellung des Säulenmaterials: 2 g Polysiloxan SE-54 (Supelco) werden in 90 mL Chloroform unter Rückfluss gelöst. 0.5 g HpBu (analog einer Synthesevorschrift für Hexakis(2,3,6-tri-*O*-pentyl)-α-cyclodextrin von A. W. König, "Gas Chromatographic Enantiomer Separation with Modified Cyclodextrins". Hüthig, Heidelberg, 1992 hergestellt) werden zugegeben. 24 g Chromosorb P-AW-DMCS (80/100 mesh Chromatographie Service GmbH) werden untergerührt. Bei 40 °C wird am Rotationsverdampfer das Chloroform über mehrere Stunden sehr langsam abgeschieden. Das entstandene Pulver wird abschliessend bei erhöhter Temperatur und im Vakuum getrocknet.

### Beispiel 2

Zur Präparation der zu verwendenden Säule wird diese in ein Ultraschallbad gelegt. Eine Seite der Säule wird verschlossen und an eine Vakuumpumpe angeschlossen. Durch die offene Seite wird die stationäre Phase eingefüllt. Abschliessend wird die offene Seite verschlossen.

### Beispiel 3

Die zu trennenden Enantiomere werden in einem Gaschromatographen aufgespalten. Der verwendete Gaschromatograph ermöglicht am Ausgang der Säule das Aufsammeln der beiden enantiomerenreinen Fraktionen in gekühlten Fallengefässen. Der Ofen des Gaschromatographen wird bei einer konstanten Temperatur betrieben, was eine gestaffelte Injektion des Racemates erlaubt. Die erhaltenen Enantiomerenüberschüsse können vom Anwender zu Lasten der Ausbeute frei gewählt werden.

### Beispiel 4

Ein racemisches Gemisch von CDBrFI (Deuterobromfluoriodmethan) wurde bei Zimmertemperatur mittels präparativer Gaschromatographie aufgetrennt. Dabei erfolgte eine Injektion von 1 mg des racemischen Gemisches (= "Analyt") bei einem Strom von 7.6 cm/min Helium unter Verwendung einer ca. 2 m langen Säule. Als stationäre Phase wurde verwendet: Chromosorb P-AW DMCS, belegt mit 9 g/100 g CSP (19 g/100 g HpBU in SE-54).

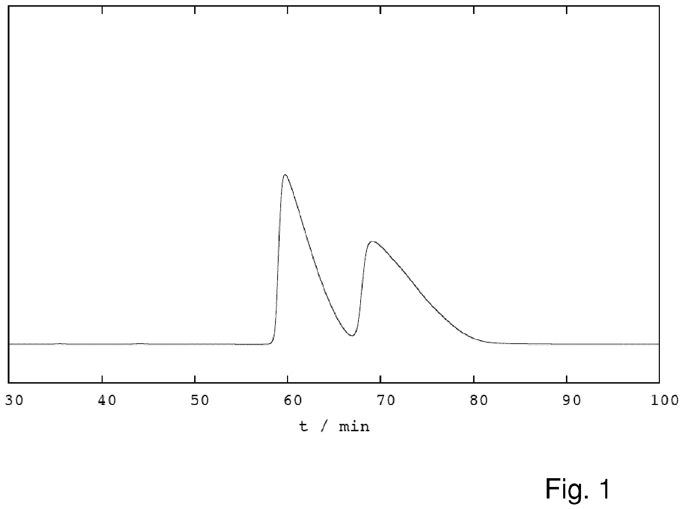

- Fig. 1: zeigt ein zugehöriges Chromatogramm, wobei in üblicher Weise ein Detektorsignal in willkürlichen Einheiten als Funktion der Zeit (in Minuten) nach der Injektion des Analyten in die Säule dargestellt ist.

Die Messdaten zeigen zwei klar aufgelöste Signale, die von den einzelnen Enantiomeren stammen.

## Patentansprüche

1. Verfahren zur gaschromatographischen Trennung eines Enantiomerengemisches, wobei das Enantiomerengemisch als gasförmige mobile Phase durch eine auf einem Trägermaterial fixierte stationäre Phase geleitet wird, **dadurch gekennzeichnet, dass** die stationäre Phase Hexakis(2,3,6-tri-*O*-butyl)-cyclo-maltohexaose (HpBu) in einem nichtflüchtigen Lösemittel ist, wobei der Butylrest von HpBu gegebenenfalls ganz oder teilweise fluoriert oder deuteriert ist.

2. Verfahren nach Anspruch 1, **dadurch gekennzeichnet, dass** das Lösemittel ein Polysiloxan ist.

3. Verfahren nach Anspruch 1 oder 2, **dadurch gekennzeichnet, dass** das Trägermaterial Kieselgur ist.

4. Verfahren nach einem der Ansprüche 1 bis 3, wobei das Enantiomerengemisch ausgewählt ist aus Halomethanen, C2- oder C3-Halocarbonsäuren sowie deren Ester, Amide und Thioester, und C2- oder C3-Halooxirane (C2-C3).

## Claims

1. A process for the gas chromatographic separation of a mixture of enantiomers, wherein the mixture of enantiomers is passed as a gaseous mobile phase through a stationary phase being fixed on a support material, **characterized in that** the stationary phase is hexakis(2,3,6-tri-*O*-butyl)-cyclo-maltohexaose (HpBu) in a non-volatile solvent, the butyl rest of HpBu optionally being completely or partially fluorinated or deuterated.

2. The process according to claim 1, **characterized in that** the solvent is a polysiloxane.

3. The process according to claim 1 or 2, **characterized in that** the support material is diatomaceous earth.

4. The process according to one of claims 1 to 3, wherein the enantiomer mixture is selected from halomethanes, C2 or C3 halocarboxylic acids and their esters, amides and thioesters, and C2 or C3 halooxiranes (C2-C3).

## Revendications

1. Procédé de séparation chromatographique en phase gazeuse d'un mélange d'énantiomères, dans lequel le mélange d'énantiomères est passé en phase mobile gazeuse à travers une phase stationnaire fixée sur un matériau support, **caractérisé en ce que** la phase stationnaire est le hexakis(2,3,6-tri-*O-*butyl)-cyclo-maltohexaose (HpBu) dans un solvant non volatil, dans lequel le reste butyle de HpBu est éventuellement totalement ou partiellement fluoré ou deutéré.

2. Procédé selon la revendication 1, **caractérisé en ce que** le solvant est un polysiloxane.

3. Procédé selon la revendication 1 ou 2, **caractérisé en ce que** le matériau support est de la terre à diatomées.

4. Procédé selon l'une des revendications 1 à 3, dans lequel le mélange d'énantiomères est sélectionné des halométhanes, des acides halocarboxyliques en C2 ou C3 et leurs esters, amides et thioesters, et des halooxiranes en C2 ou C3 (C2-C3).
